# EUROPÄISCHE PATENTSCHRIFT

(11) **EP 3 049 483 B1**
(45) Veröffentlichungstag und Bekanntmachung des Hinweises auf die Patenterteilung: **12.06.2019**
(21) Anmeldenummer: 14772153.4
(22) Anmeldetag: 24.09.2014
(51) Int. Cl.: C09C 1/62, C09C 1/64, C09C 3/12, C09C 1/00, C09D 5/00, C08K 9/02, C09D 11/037, C09D 5/36

(54) **MIT EINER SILANSCHICHT, DIE WENIGSTENS ZWEI VERSCHIEDENE BIFUNKTIONELLE SILANE ENTHÄLT, MODIFIZIERTE METALLEFFEKTPIGMENTE**
METAL EFFECT PIGMENTS MODIFIED WITH A SILANE LAYER CONTAINING AT LEAST TWO DIFFERENT BIFUNCTIONAL SILANES
PIGMENTS À EFFET MÉTALLIQUE MODIFIÉS COMPORTANT UNE COUCHE DE SILANE QUI CONTIENT AU MOINS DEUX SILANES BIFONCTIONNELS DIFFÉRENTS

(30) Priorität: 25.09.2013 DE 102013015980
(43) Veröffentlichungstag der Anmeldung: 03.08.2016
(73) Patentinhaber: Schlenk Metallic Pigments GmbH, 91154 Roth - Barnsdorf (DE)
(72) Erfinder: WÜHR, Andreas, 90439 Nürnberg (DE); LANG, Nina, 91052 Erlangen (DE)
(74) Vertreter: Heinemann, Monica
(86) Internationale Anmeldenummer: PCT/EP2014/070345
(87) Internationale Veröffentlichungsnummer: WO 2015/044188

(56) Entgegenhaltungen:
- WO-A1-99/57204
- WO-A1-2006/041658
- WO-A1-2013/156615

## Beschreibung

Die Erfindung betrifft oberflächenmodifizierte Metalleffektpigmente und ein Verfahren zu deren Herstellung. Darüber hinaus betrifft die Erfindung auch die Verwendung der oberflächenmodifizierten Metalleffektpigmente in Beschichtungszusammensetzungen.

### Hintergrund der Erfindung

Pigmente, insbesondere Metallpigmente, werden häufig in Lacken, Farben, Druckfarben, Pulverlacken, Kosmetika oder Kunststoffen zur Farbgebung eingesetzt. Bei Farben, Lacken, Druckfarben, Kosmetika und Pulverlacken handelt es sich um flüssige oder pulverförmige Beschichtungsstoffe, die auf Oberflächen aufgebracht werden, um sowohl verbesserte optische als auch physikalische Eigenschaften, wie etwa Korrosionsschutz, zu erhalten. Nach dem Aufbringen der Beschichtungszusammensetzungen werden diese durch physikalische und/oder chemische Methoden gehärtet, um einen durchgängigen festen Film auf dieser Oberfläche zu bilden. Diese physikalischen und chemischen Methoden zur Härtung umfassen beispielsweise das Verdampfen von Lösungsmittel oder die Härtung mittels elektromagnetischer Strahlung wie etwa UV-Strahlung.

Farben und Lacke umfassen in der Regel Bindemittel, Lösungsmittel, Pigmente und gegebenenfalls Füllstoffe. Als Pigmente finden häufig Metalleffektpigmente Anwendung, um Erzeugnisse mit hoher optischer Wertigkeit zu erhalten. Metalleffektpigmente zeichnen sich durch einen hohen metallischen Glanz und ein sehr gutes Deckvermögen aus. Die optische Wirkung von Metalleffektpigmenten resultiert aus der Reflexion von Licht an den parallel ausgerichteten Metallplättchen.

Jedoch stellt die Verwendung von Effektpigmenten, insbesondere von Metalleffektpigmenten, in Lacken, Farben, Druckfarben, Pulverlacken, Kosmetika oder Kunststoffen häufig ein Problem dar. Das Verhalten von Metalleffektpigmenten im Lack hängt vor allem von deren Oberflächenmodifizierung und der damit zusammenhängenden Kompatibilität mit unterschiedlichen Bindemitteln ab. Häufig weisen Metalleffektpigmente eine zufriedenstellende Verträglichkeit nur mit einem bestimmten Bindemittel oder einer bestimmten Gruppe von Bindemitteln auf.

Es besteht daher ein Bedarf an modifizierten Pigmenten, die mit vielen unterschiedlichen Bindemitteln wie beispielsweise Polyurethan-haltigen Bindemitteln, Acrylat- oder Methacrylat-haltigen Bindemitteln, Polyester-haltigen Bindemitteln, Alkydharz-haltigen Bindemitteln, Harnstoff- oder Melaminharzhaltigen Bindemitteln oder Epoxidharz-haltigen Bindemitteln kompatibel sind. Wünschenswert sind darüber hinaus auch Pigmente, die sowohl in wasserbasierten also auch in lösungsmittelbasierten Systemen verwendet werden können und/oder die einen Einsatz in einer Vielzahl von möglichen Anwendungen, wie Coil-Coating Anwendungen, UV-härtenden Systemen, PUR- und Acrylatlacken ermöglichen. Eine verbesserte Verträglichkeit von Pigmenten mit einer Vielzahl an unterschiedlichen Bindemitteln führt im Vergleich zu solchen Pigmenten, die nur mit einer Art Bindemittel verwendet werden können, zu einer erheblichen Kosteneinsparung für den Anwender solcher Pigmente.

Darüber hinaus weisen bekannte Pigmente häufig den Nachteil auf, dass sie nur eine geringe Orientierung im Lacksystem erlauben, was zu einer Beeinträchtigung der gewünschten optischen Wirkung führen kann. Ein weiteres Problem besteht darin, dass eine Agglomeration oder Flokkulation der Pigmente vermieden werden muss. Eine hohe Flokkulationsneigung ist meist auf eine ungenügende sterische oder elektrostatische Stabilisierung der Pigmente zurückzuführen.

Bislang erfolgt eine Optimierung der Eigenschaften von Beschichtungssystemen üblicherweise durch das Aufbringen von Reagenzien auf Metallpigmente, die ein Aufschwimmen der Pigmente ("Leafing") in der Druckfarbe bzw. dem Lack hervorrufen. Durch dieses sog. Leafing-Verhalten richten sich die Partikel an der Lackfilmoberfläche aus, was eine Verbesserung des Glanzes und der Brillanz des Druckfilms ergibt. Dies wirkt sich im Umkehrschluss jedoch negativ auf Haftung und Abriebbeständigkeit sowie Zwischenschichthaftung bei Mehrschichtaufbauten aus.

In der EP 0 634 459 A2 wird beispielsweise die Verwendung von hydrophoben Alkylsilanen, wie Methyltriethoxysilan oder Hexadecyltriethoxysilan zur Beschichtung von Perglanzpigmenten beschrieben. Die mit diesen Silanen beschichteten Perlglanzpigmente sollen in Lacken und Gießharzen ein starkes Leafing-Verhalten zeigen, das einen erhöhten Perlglanz aufgrund einer besseren Orientierung der Pigmente an der Oberfläche bewirken soll. Ein Nachteil dieser Beschichtung ist, dass die Pigmente, vor allem bei wasserhaltigen Lacksystemen, nur schwache Wechselwirkungen mit dem umgebenden Bindemittel eingehen, was einen nachteiligen Einfluss auf die mechanischen Eigenschaften und damit häufig einhergehend die optischen Eigenschaften der Beschichtung hat.

Die WO 99/57204 A1 beschreibt Effektpigmente für wässrige Beschichtungssysteme, welche mit reaktiven Orientierungshilfsmitteln wie Methacryl- oder Vinyl-funktionalisierten Silanen beschichtet sind. Neben den reaktiven Orientierungshilfsmitteln können die Pigmente auch zusätzlich mit hydrophoben Alkylsilanen, wie in der EP 0 634 459 A2 beschrieben, beschichtet sein. Die in der WO 99/57204 A1 beschriebenen Pigmente zeigen ein Non-Leafing-Verhalten und sollen einerseits leicht vom Bindemittel einer wässrigen Farbe oder eines wässrigen Lacks benetzt werden und andererseits mit der umgebenden Bindemittelmatrix einen innigen Verbund eingehen. Hiermit soll die Schwitzwasserbeständigkeit sowie die Beständigkeit gegen korrosive Einflüsse eines gehärteten Lacks auf Basis eines wässrigen Beschichtungssystems verbessert werden.

Die WO 2006/041658 A1 offenbart ein metallisches Pigment, welches mit mindestens einem funktionalisierten Silan und einem Polymer beschichtet ist. Die WO 2013/156615 A1 beschreibt Metalleffektpigmente, die mit einer Schicht aus einem Metalloxid bedeckt und ferner mit einem in sich vernetzten Silan-Diol-Reaktionsprodukt umhüllt sind. Die WO 2004/092284 A1 beschreibt oberflächenmodifizierte Effektpigmente, die u.a. mit Silanen nachbehandelt wurden. Die US 5,472,491 A beschreibt Perlglanzpigmente, die eine Metalloxidschicht und u.a. organofunktionelle Silane als organisches Kupplungsreagenz umfassen. Die US 2006/0053968 A offenbart PVD-Metalleffektpigmente, die mit Siliciumdioxid und anschließend mit einem bifunktionellen Silan beschichtet wurden. Die WO 01/98421 A offenbart ein Pigment mit einer Aluminiumoxid- oder Aluminiumoxid/Ceroxid-Beschichtung und einer Beschichtung aus hydrolysiertem Silankupplungsmittel. Auf Seite 226 von R. Schwalm, "UV-Coatings", 1. Edition, Elsevier (2007), wird die Beschichtung von Metalloxidpartikeln mit bifunktionellem Silan beschrieben.

Die Aufgabe ist es nun, ein Pigment bereitzustellen, welches sowohl gute anwendungstechnische als auch gute optische Eigenschaften aufweist, und welches auch mit verschiedenen Bindemitteln eine gute Verträglichkeit zeigt. Unter anwendungstechnischen Eigenschaften werden im Rahmen der vorliegenden Erfindung insbesondere eine sehr gute Abriebbeständigkeit sowie eine gute Vernetz- und Benetzbarkeit des Pigmentes verstanden. Unter guten optischen Eigenschaften sind ein sehr hoher Glanz und gutes Deckvermögen zu verstehen. Insbesondere war es eine Aufgabe der vorliegenden Erfindung Metalleffektpigmente bereitzustellen, die eine verbesserte Orientierbarkeit in Lacksysteme und somit bessere optische Eigenschaften aufweisen und eine geringere Flokkulationsneigung zeigen.

Es wurde nun überraschenderweise gefunden, dass Metalleffektpigmenten, die mit zwei voneinander verschiedenen bifunktionellen Silanen beschichtet sind, die Anwendungsbreite dieser Metallpigmente erweitern. Es zeigte sich, dass durch zwei voneinander verschiedene funktionelle Gruppen die Vorteile der beiden Funktionen, z.B. eine bessere Benetzung oder eine geringere Flokkulationsneigung, gezielt ausgenutzt werden können.

### Zusammenfassung der Erfindung

Die vorliegende Erfindung betrifft daher modifizierte Metalleffektpigmente, wobei die modifizierten Metalleffektpigmente Metalleffektpigmente sind, welche bedeckt sind mit mindestens einer Schicht aus einem Metalloxid, ausgewählt aus der Gruppe bestehend aus Siliciumdioxid, Aluminiumoxid, Titandioxid, Eisenoxid, Zinnoxid, Zinkoxid und Mischungen davon, wobei an diese Schicht eine Silanschicht gebunden ist, welche wenigstens zwei voneinander verschiedene bifunktionelle Silane oder davon abgeleitete Einheiten umfasst, dadurch gekennzeichnet, dass
die wenigstens zwei voneinander verschiedenen bifunktionellen Silane ausgewählt sind aus einer Kombination von
1) einem mit einem primären Amin funktionalisierten Silan und einem davon verschiedenen Silan, ausgewählt aus der Gruppe, bestehend aus (Meth)acryl-, Vinyl-, Cyano-, , Hydroxyl-, Epoxy-, Isocyanat-, Mercapto-funktionalisiertem Silan und einem mit einem sekundären Amin funktionalisierten Silan
2) einem (Meth)acryl-funktionalisierten Silan und einem Isocyanat- oder Epoxy-funktionalisiertem Silan oder
3) einem Azid-funktionalisierten Silan und einem (Meth)acryl-, Vinyl-, Cyano-, Amin-, Hydroxyl-, Epoxy-, Isocyanat- oder Mercapto-funktionalisiertem Silan.

Außerdem betrifft die Erfindung ein Verfahren zur Herstellung der erfindungsgemäßen modifizierten Metalleffektpigmente nach Anspruch 5 und deren Verwendung in Beschichtungssystemen.

### Detaillierte Beschreibung der Erfindung

Die Erfindung beschreibt modifizierte Metalleffektpigmente, die mit wenigstens zwei voneinander verschiedenen bifunktionellen Silanen beschichtet sind.

Die modifizierten Metalleffektpigmente sind Metalleffektpigmente, welche mit mindestens einer Schicht aus einem oder mehreren Metalloxiden bedeckt sind. Die in der Metalloxidschicht verwendeten Oxide umfassen Siliziumdioxid, Aluminiumoxid, Titandioxid, Eisenoxid, Zinnoxid und Zinkoxid oder Mischungen davon. Es können jedoch auch zwei oder mehr Schichten aus unterschiedlichen Metalloxiden wie z.B. Siliziumdioxid und Eisenoxid, Siliziumoxid und Aluminiumoxid oder Siliziumoxid und Titandioxid vorliegen. Die Auftragung der Metalloxidschicht erfolgt nach dem Fachmann bekannten Verfahren. Beispielsweise kann die Auftragung einer Siliziumoxidschicht über ein Sol-Gel-Verfahren erfolgen, bei dem Tetraethylorthosilikat, ein kurzkettiger Alkohol, Wasser und eine Base eingesetzt werden. Die Auftragung einer Eisenoxidschicht kann z.B. durch Zutitrieren einer wässrigen FeCl3 Lösung erfolgen, wobei der pH-Werts durch Zutitrieren einer anorganischen Base vorzugsweise bei einem pH im Bereich von 2,5-3,5 konstant gehalten wird. Die Auftragung einer Titandioxidschicht kann beispielsweise durch Zugabe einer wässrigen TiCl₄-Lösung zu einer wässrigen Lösung des Pigments bei einem pH-Wert von vorzugsweise im Bereich von 1,5-2,5 erfolgen. Vorzugsweise umfasst die Metalloxidschicht kein Metallhydroxid oder Metalloxidhydrat.

An die mindestens eine Schicht aus einem oder mehreren Metalloxiden ist eine Silanschicht gebunden. Die Silanschicht umfasst wenigstens zwei voneinander verschiedene bifunktionelle Silane oder davon abgeleitete Einheiten.

Es hat sich gezeigt, dass durch Verwendung von zwei verschiedenen bifunktionellen Silanen erfindungsgemäße Metalleffektpigmente bereitgestellt werden können, die eine bessere Kompatibilität und Benetzung mit verschiedenen Bindemitteln aufweisen, unter Beibehaltung guter optischer Eigenschaften und geringer Flokkulationsneigung. Metalleffektpigmente, die mit einem Amin-funktionalisiertem Silan neben einem weiteren funktionalisiertem Silan modifiziert sind, verfügen ferner überraschenderweise über eine besonders gute Gasungsstabilität, insbesondere in Gegenwart von Eisenoxidpigmenten als weitere Pigmente neben den erfindungsgemäßen Metalleffektpigmenten.

Generell werden Silane mit zwei funktionellen Gruppen als bifunktionelle Silane bezeichnet.

Die erste funktionelle Gruppe, welche zur Verankerung der Verbindung auf die Pigmentoberfläche dient, ist eine Silangruppe der allgemeinen Formel (I)

-SiXₙR₃₋ₙ _{(I)},

wobei
X üblicherweise ausgewählt ist aus Hydroxy, Halogen, wie Cl oder Br, oder Alkoxy, wie Methoxy, Ethoxy, Propoxy, Butoxy, Methoxyethoxy, Butoxyethoxy oder Methoxyethoxyethoxy,
R üblicherweise ein C₁-₃-Alkyl, wie Methyl, Ethyl, Propyl oder Isopropyl ist und n eine ganze Zahl zwischen 1 und 3 ist.

Die zweite funktionelle Gruppe ist eine Gruppe, welche mit dem Bindemittel eine chemische Reaktion eingehen kann. Die zweite funktionelle Gruppe ist üblicherweise endständig über eine verzweigte oder unverzweigte Alkylenspacergruppe mit der Silangruppe verknüpft.

Durch die Anwesenheit der zweiten reaktiven funktionellen Gruppe unterscheiden sich die hierin beschriebenen bifunktionellen Silane von nichtreaktiven Silanen wie Alkylsilanen, wie beispielsweise Propylsilan, Butylsilan, Hexylsilan, Octylsilan, Hexadecylsilan, oder Octadecylsilan und Arylsilanen, wie Phenylsilan. Diese Silane gehen üblicherweise keine chemische Reaktion mit Bindemitteln ein und besitzen neben der unreaktiven Alkyl- oder Arylgruppe lediglich eine einzige reaktive funktionelle Gruppe, nämlich eine Silangruppe der oben beschriebenen allgemeinen Formel (I).

Die zweite funktionelle Gruppe wird ausgewählt aus der Gruppe, bestehend aus einer (Meth)acryl-, Vinyl-, Cyano-, Amin-, Hydroxyl-, Epoxy- Carboxy-, Azido-, Isocyanat-, Azid- oder Mercaptogruppe sein. Der Begriff "Amingruppe" wie hierin verwendet umfasst dabei primäre und sekundäre Amingruppen und Kombinationen davon.

Vorzugsweise liegt in der Silanschicht neben den wenigstens zwei voneinander verschiedenen bifunktionellen Silanen zusätzlich kein Alkylsilan in derselben Schicht vor. Vorzugsweise weist das modifizierte Metalleffektpigment ferner neben der Metalloxidschicht und der Silanschicht keine weitere Schicht aus einem oder mehreren organischen Polymeren auf, inbesondere keine Polymere aus der Gruppe der Polyether, Polyacrylate, Polyvinylcaprolactame, Cellulose, Polystyrole, Polyvinylalkohole, Polyvinylacetate, Polysiloxane, Derivate der genannten Polymere oder Mischungen davon.

Die verwendeten Silane sind vorzugsweise niedermolekular (M < 500 g/mol) und liegen in einer besonders bevorzugten Ausführungsform in monomerer Form vor.

Die Silane können mit der das Metalleffektpigment bedeckenden Metalloxidschicht Bindungen eingehen. Die Silane sind dabei über die Silangruppe unter Ausbildung von Si-O-Bindungen kovalent an die Metalloxidschicht auf dem Effektpigment gebunden.

In einer Ausführungsform sind die wenigstens zwei voneinander verschiedenen bifunktionellen Silane ausgewählt aus einer Kombination von
a) einem mit einem primären Amin funktionalisierten Silan und
b) einem davon verschiedenen Silan, ausgewählt aus der Gruppe, bestehend aus einem (Meth)acryl-funktionalisiertem, einem Vinyl-funktionalisiertem, einem Cyano-funktionalisiertem, einem mit einem sekundären Amin funktionalisierten, einem Hydroxyl-funktionalisierten, einem Epoxy- funktionalisierten, einem Isocyanat-funktionalisierten und einem Mercapto-funktionalisiertem Silan,

In einer weiteren Ausführungsform sind die wenigstens zwei voneinander verschiedenen bifunktionellen Silane ausgewählt aus einer Kombination von
a) einem (Meth)acryl-funktionalisierten Silan und
b) einem Isocyanat-funktionalisierten, einem mit einem sekundären Amin funktionalisierten oder einem Epoxy-funktionalisiertem Silan

In noch einer weiteren Ausführungsform sind die wenigstens zwei voneinander verschiedenen bifunktionellen Silane ausgewählt aus einer Kombination von
a) einem Azid-funktionalisierten Silan und
b) einem Silan, ausgewählt aus der Gruppe, bestehend aus einem (Meth)acryl-funktionalisiertem, einem Vinyl-funktionalisiertem, einem Cyano-funktionalisiertem, einem mit einem primären und/oder sekundären Amin funktionalisierten, einem Hydroxyl-funktionalisierten, einem Epoxy- funktionalisierten, einem Isocyanat-funktionalisierten und einem Mercapto-funktionalisiertem Silan.

In einer bevorzugten Ausführungsform sind die wenigstens zwei voneinander verschiedenen bifunktionellen Silane ausgewählt aus einer Kombination von einem mit einem primären Amin funktionalisierten Silan und einem Nitrilsilan. Nitrilgruppen können unter Hitzeeinwirkung leicht zu Carbonsäuregruppen oxidiert werden. Dies ermöglicht die elektrostatische Stabilisierung sowohl in saurem als auch in basischem Milieu. Primäre Amingruppen liegen bei einem sauren pH-Wert (pH-Wert < pH 7, z.B. pH 3-6) in protonierter Form (R-NH₃⁺) vor. Carbonsäuren liegen bei einem basischen pH-Wert (pH-Wert > pH 7, z.B. pH 8-11) in deprotonierter Form (COO-) vor. Dadurch wird sowohl im Sauren als auch im Basischen eine Ladung an der Oberfläche und somit eine elektrostatische Stabilisierung erzeugt. Somit liegt keine Abhängigkeit der Flokkulationsneigung vom pH-Wert vor. Zusätzlich zu einer vom pH-Wert unabhängigen Stabilisierung ist durch diese Kombination auch eine Vernetzung durch die beiden unterschiedlich funktionellen Silane mit der Lackmatrix möglich. Beispielsweise können Carbonsäuregruppen mit in Polyesterbindemitteln vorliegenden freien OH-Gruppen, bzw. oberflächengebundene primäre Amingruppen mit in Polyesterbindemitteln vorliegenden freien COOH-Gruppen reagieren. Dies ist in verschiedenen Polyesterbindemitteln möglich, unabhängig von der Anzahl der im Polyester vorliegenden freien OH oder COOH Gruppen.

In einer weiteren bevorzugten Ausführungsform sind die wenigstens zwei voneinander verschiedenen bifunktionellen Silane ausgewählt aus einer Kombination von einem mit einem primären Amin funktionalisierten Silan und einem mit einem sekundären Amin funktionalisierten Silan. Durch die verschiedene Reaktivität der beiden Aminofunktionen wird die Vernetzung in unterschiedlichen Systemen verbessert. Durch die Kombination der verschieden Amine können die unterschiedlichen Eigenschaften und Reaktivitäten des primären und sekundären Amins ausgenutzt werden. Beispielsweise sind sekundäre Amine basischer und nucleophiler als primäre Amine und weisen damit eine erhöhte Reaktivität in nukleophilen S_{N}-Vernetzungsreaktionen mit dem Bindemittel auf. Darüber hinaus sind sekundäre Amine im Vergleich zu primären Aminen (oxidations-)stabiler. Primäre und sekundäre Amine können auch mit im Bindemittel vorhandenen Carbonsäuregruppen zu Amiden reagieren. Die Amide der primären Amine tragen schwach saure NH-Gruppen, welche im basischen deprotoniert werden, wobei die hier entstehenden Amidanionen besonders mesomeriestabilisiert sind. Die Amide von primären Aminen können somit in wässriger basischer Lösung ein Salz ausbilden, welches die Wasserlöslichkeit verbessert. Dieses Verhalten ist für wässrige Lacke von Vorteil. Diese Eigenschaft trifft auf die von sekundären Aminen abgeleiteten Amide nicht zu.

In einer weiteren bevorzugten Ausführungsform sind die wenigstens zwei voneinander verschiedenen bifunktionellen Silane ausgewählt aus einer Kombination von einem mit einem primären Amin funktionalisierten Silan und einem Epoxy-funktionalisierten Silan. Die primären Aminogruppen können beispielsweise in Polyurethan-(PU)-basierten Systemen durch die Ausbildung von Urethan- oder Harnstoffbindungen mit dem Lacksystem vernetzt werden. Die Epoxy-Gruppen können z.B. durch im Bindemittel vorhandene Säureanhydrid-Gruppen (z.B. Maleinsäureanhydrid) oder Amingruppen thermisch vernetzt werden.

In einer weiteren bevorzugten Ausführungsform sind die wenigstens zwei voneinander verschiedenen bifunktionellen Silane ausgewählt aus einer Kombination von einem mit einem primären oder sekundären Amin funktionalisierten Silan und einem Vinyl-funktionalisierten Silan. Während die Amine u.a. mit freien Isocyanateinheiten eines 2K/1K-PU Systems reagieren können ergeben sich durch das Vinylsilan zusätzliche mögliche Vernetzungsreaktionen mit einem Bindemittel mit konjugierten Doppelbindungen über eine Cycloadditon. Eine Reaktion ist beispielsweise über eine Diels-Alder Reaktion möglich. Mit Bindemitteln mit isolierten Doppelbindungen ist eine Vernetzung über die sogenannte "En"-Reaktion möglich.

In noch einer weiteren bevorzugten Ausführungsform sind die wenigstens zwei voneinander verschiedenen bifunktionellen Silane ausgewählt aus einer Kombination von einem mit einem primären oder sekundären Amin funktionalisierten Silan und einem (Meth)acryl-funktionalisierten Silan. Diese Kombination kann gute Haftungseigenschaften sowohl in einem PU- als auch in einem UV-Lacksystem erwirken. Die Methacrylfunktion kann in einer radikalischen Polymerisation mit einem UV-Bindemittel, wie z.B. einem Acrylathaltigen Bindemittel, reagieren, während Amine u.a. mit freien Isocyanateinheiten eines 2K/1K-PU Systems reagieren können.

In noch einer weiteren bevorzugten Ausführungsform sind die wenigstens zwei voneinander verschiedenen bifunktionellen Silane ausgewählt aus einer Kombination von einem (Meth)acryl-funktionalisierten Silan und einem Isocyanat-funktionalisierten Silan. Die Methacrylfunktion kann in einer radikalischen Polymerisation mit einem UV-Bindemittel reagieren, während die Isocyanatgruppe mit Alkohol- oder Aminogruppen eines Bindemittels reagieren können.

In noch einer weiteren bevorzugten Ausführungsform sind die wenigstens zwei voneinander verschiedenen bifunktionellen Silane ausgewählt aus einer Kombination von einem Azid-funktionalisierten Silan und einem (Meth)acryl-, Vinyl-, Cyano-, Amin-, Hydroxyl-, Epoxy-, Isocyanat- oder Mercapto-funktionalisiertem Silan.

Beispiele für Amin-funktionalisierte Silane sind 3-Aminopropyltriethoxysilan, 3-Aminopropyltrimethoxysilan, 4-Aminobutyltriethoxysilan, 3-Aminopropyltris(methoxyethoxyethoxy)silan, 11-Aminoundecyltriethoxysilan, 3-Aminopropylsilantriol, 3-Aminopropylmethyldiethoxysilan, 3-Aminopropyldiisopropylethoxysilan, 3-Aminopropyldimethylethoxysilan, N-Aminoethyl-aminopropyltrimethoxysilan, N-Aminoethyl-3-aminopropyltriethoxysilan, N-Aminohexyl-2-aminomethyltriethoxysilan, N-Aminohexyl-aminomethyltrimethoxysilan, N-Aminoethyl-11-aminoundecyltrimethoxysilan, (Aminomethylaminomethyl)phenethyl-trimethoxysilan, N-Aminoethyl-3-aminopropylsilantriol, N-Aminoethyl-3-aminopropylmethyldimethoxysilan, N-Aminoethylaminoisobutylmethyldimethoxysilan, (Aminoethylamino)isobutyldimethylmethoxysilan, (Trimethoxysilylpropyl)diethylentriamin, N-Methyl-3-aminopropyltrimethoxysilan, N-Ethylaminoisobutyltrimethoxysilan, N-(n-Butyl)-3-aminopropyltrimethoxysilan, N-(n-Butyl)-3-aminopropyltriethoxysilan, N-(n-Propyl)-3-aminopropyltriethoxysilan, N-(n-Propyl)-3-aminopropyltrimethoxysilan, N-Phenyl-3-aminopropyltrimethoxysilan, N-Allyl-3-aminopropyltrimetoxysilan, N-Ethylaminoisobutylmethyldiethoxysilan und N-Methyl-3-aminopropylmethyldimethoxysilan.

Bevorzugte mit einem primären Amin funktionalisierte Silane sind 3-Aminopropyltriethoxysilan, 3-Aminopropyltrimethoxysilan, 4-Aminobutyltriethoxysilan, 11-Aminoundecyltriethoxysilan, 3-Aminopropylmethyldiethoxysilan und 3- 3-Aminopropyldimethylethoxysilan, insbesondere 3-Aminopropyltriethoxysilan und 3-Aminopropyltrimethoxysilan.

Bevorzugte mit einem sekundären Amin funktionalisierte Silane sind N-(n-Butyl)-3-aminopropyltrimethoxysilan, N-(n-Butyl)-3-aminopropyltriethoxysilan, N-(n-Propyl)-3-aminopropyltriethoxysilan N-(n-Propyl)-3-aminopropyltrimethoxysilan, N-Phenyl-3-aminopropyltrimethoxysilan, insbesondere N-(n-Butyl)-3-aminopropyltrimethoxysilan und N-(n-Butyl)-3-aminopropyltriethoxysilan.

Bevorzugte (Meth)acryl-funktionalisierte Silane sind 3-Methacryloxypropyltrimethoxysilan, 3-Methacryloxypropyltriethoxysilan, 2-Methacryloxyethyltrimethoxysilan, 2-Methacryloxyethyltriethoxysilan, 3-Methacryloxypropyltris(methoxyethoxy)silan, 3-Methacryloxypropyltris(butoxyethoxy)silan, 3-Methacryloxypropyltris(propoxy)-silan, 3-Methacryloxypropyltris(butoxy)silan, 3-Acryloxypropyltrimethoxysilan, 2-Acryloxyethyltrimethoxysilan, 3-Acryl-oxypropyltrimethoxysilan, 2-Acryloxy-ethyltriethoxysilan, 3-Acryloxypropyltris(methoxy-ethoxy)silan, 3-Acryloxypropyltris(butoxyethoxy)silan, 3-Acryloxypropyl-tris(propoxy)silan und 3-Acryloxypropyltris(butoxy)silan, insbesondere 3-Methacryloxypropyltrimethoxysilan und 3-Methacryloxypropyltriethoxysilan.

Bevorzugte Vinyl-funktionalisierte Silane sind Vinyltrimethoxysilan, Vinyltriethoxysilan, Vinylethyldichlorsilan, Vinylmethyldiacetoxysilan, Vinylmethyldichlorsilan, Vinyl-methyldiethoxysilan, Vinyltriacetoxysilan und Vinyltrichlorsilan, insbesondere Vinyltriethoxysilan und Vinyltrimethoxysilan.

Bevorzugte Cyano-funktionalisierte Silane sind 3-Cyanopropyltriethoxysilan, 3-Cyanopropyltrimethoxysilan und 2-Cyanoethyltrimethoxysilane.

Bevorzugte Isocyanat-funktionalisierte Silane sind 3-Isocyanatopropyltriethoxysilan und 3-Isocyanatopropyltrimethoxysilan.

Bevorzugte Mercapto-funktionalisierte Silane sind 3-Mercaptopyltriethoxysilan, 3-Octanoylthio-1-propyltriethoxysilan und 3-Mercaptopropyltrimethoxysilan.

Bevorzugte Epoxy-funktionalisierte Silane sind 3-Glycidyloxypropyltrimethoxysilan, beta-(3,4-Epoxycyclohexyl)ethyltrimethoxysilan und 1,2-Epoxy-4(ethyltriethoxysilyl)-cyclohexan.

Bevorzugte Azid-funktionalisierte Silane sind 6-Azidosulfonylhexyltriethoxysilan und (Azidomethyl)phenethyltrimethoxysilan.

In einer besonders bevorzugten Ausführungsform sind die wenigstens zwei voneinander verschiedenen bifunktionellen Silane ausgewählt aus einer Kombination von:
1) 3-Aminopropyltriethoxysilan und 3-Glycidyloxypropyltrimethoxysilan,
2) 3-Aminopropyltrimethoxysilan und 3-Glycidyloxypropyltrimethoxysilan,
3) 4-Aminobutyltriethoxysilan und 1,2-Epoxy-4(ethyltriethoxysilyl)-cyclohexan,
4) 3-Aminopropyltriethoxysilan und N-(n-Butyl)-3-aminopropyltriethoxysilan,
5) 3-Aminopropyltrimethoxysilan und N-(n-Butyl)-3-aminopropyltriethoxysilan,
6) 3-Aminopropyltriethoxysilan und N-(n-Butyl)-3-aminopropyltrimethoxysilan,
7) 3-Aminopropyltrimethoxysilan und N-(n-Butyl)-3-aminopropyltrimethoxysilan,
8) 4-Aminobutyltriethoxysilan und N-(n-Butyl)-3-aminopropyltriethoxysilan,
9) 3-Aminopropyltriethoxysilan und N-(n-Propyl)-3-aminopropyltriethoxysilan,
10) 3-Aminopropyltriethoxysilan und 3-Methacryloxypropyltriethoxysilan,
11) 3-Aminopropyltrimethoxysilan und 3-Methacryloxypropyltrimethoxysilan,
12) 3-Aminopropyltriethoxysilan und 3-Methacryloxypropyltrimethoxysilan,
13) N-(n-Butyl)-3-aminopropyltriethoxysilan und 3-Methacryloxypropyltrimethoxysilan,
14) N-(n-Propyl)-3-aminopropyltriethoxysilan und 3-Methacryloxypropyltrimethoxysilan,
15) 3-Aminopropyltriethoxysilan und Vinyltriethoxysilan,
16) 4-Aminobutyltriethoxysilan und Vinyltriethoxysilan,
17) N-(n-Butyl)-3-aminopropyltriethoxysilan und Vinyltriethoxysilan,
18) 3-Aminopropyltriethoxysilan und 3-Isocyanatopropyltriethoxysilan,
19) 3-Aminopropyltrimethoxysilan und 3-Isocyanatopropyltrimethoxysilan,
20) 4-Aminobutyltriethoxysilan und 3-Isocyanatopropyltriethoxysilan
21) N-(n-Butyl)-3-aminopropyltriethoxysilan und 3-Isocyanatopropyltriethoxysilan,
22) 3-Methacryloxypropyltriethoxysilan und 3-Isocyanatopropyltriethoxysilan,
23) 3-Methacryloxypropyltrimethoxysilan und 3-Isocyanatopropyltrimethoxysilan,
24) 6-Azidosulfonylhexyltriethoxysilan und 3-Aminopropyltriethoxysilan,
25) 6-Azidosulfonylhexyltriethoxysilan und 3-Methacryloxypropyltrimethoxysilan,
26) 6-Azidosulfonylhexyltriethoxysilan und 3-Glycidyloxypropyltrimethoxysilan und
27) 6-Azidosulfonylhexyltriethoxysilan und 3-Isocyanatopropyltriethoxysilan.

Ganz besonders bevorzugt sind die wenigstens zwei voneinander verschiedenen bifunktionellen Silane ausgewählt aus einer Kombination von:
- 3-Aminopropyltriethoxysilan und 3-Glycidyloxypropyltrimethoxysilan,
- 4-Aminobutyltriethoxysilan und 1,2-Epoxy-4(ethyltriethoxysilyl)-cyclohexan,
- 3-Aminopropyltriethoxysilan und N-(n-Butyl)-3-aminopropyltriethoxysilan,
- 3-Aminopropyltrimethoxysilan und N-(n-Butyl)-3-aminopropyltriethoxysilan,
- 3-Aminopropyltriethoxysilan und N-(n-Butyl)-3-aminopropyltrimethoxysilan,
- 3-Aminopropyltriethoxysilan und 3-Methacryloxypropyltrimethoxysilan,
- 3-Aminopropyltriethoxysilan und Vinyltriethoxysilan,
- 3-Aminopropyltriethoxysilan und 3-Isocyanatopropyltriethoxysilan,
- 3-Methacryloxypropyltriethoxysilan und 3-Isocyanatopropyltriethoxysilan,
- 3-Methacryloxypropyltrimethoxysilan und 3-Isocyanatopropyltrimethoxysilan, oder
- 6-Azidosulfonylhexyltriethoxysilan und 3-Aminopropyltriethoxysilan, noch bevorzugter
- 3-Aminopropyltriethoxysilan und N-(n-Butyl)-3-aminopropyltriethoxysilan,
- 3-Aminopropyltriethoxysilan und N-(n-Butyl)-3-aminopropyltrimethoxysilan,
- 6-Azidosulfonylhexyltriethoxysilan und 3-Aminopropyltriethoxysilan,
- 4-Aminobutyltriethoxysilan und 1,2-Epoxy-4(ethyltriethoxysilyl)-cyclohexan,
- 3-Methacryloxypropyltriethoxysilan und 3-Isocyanatopropyltriethoxysilan, oder
- 3-Methacryloxypropyltrimethoxysilan und 3-Isocyanatopropyltrimethoxysilan.

Die Metalleffektpigmente können übliche dem Fachmann bekannte Metalleffektpigmente sein. Bevorzugt sind die Metalleffektpigmente ausgewählt aus der Gruppe bestehend aus Aluminium-, Titan-, Zirkonium-, Kupfer-, Zink-, Gold-, Silber-, Zinn-, Stahl- und Eisen-Pigmenten, sowie Mischungen davon. Des Weiteren können auch Pigmente aus Legierungen der genannten Metalle wie Goldbronze verwendet werden. Die Metalleffektpigmente umfassen, wie der Name bereits verdeutlicht, keine Perlglanzpigmente oder Glimmer. Bevorzugt sind Aluminiumpigmente, insbesondere Cornflake oder Silberdollar-Pigmente. Besonders bevorzugt können auch Vakuum Metallisierte Pigmente (VMP) verwendet werden wie etwa DECOMET® Partikel, erhältlich bei der Firma Schlenk Metallic Pigments GmbH, Roth, Deutschland.

In einer besonders bevorzugten Ausführungsform ist das Metalleffektpigment ein Aluminiumpigment, das mit einer Schicht aus Siliziumdioxid bedeckt ist.

Ganz besonders bevorzugt ist ein Aluminiumpigment, das mit einer Schicht aus Siliziumdioxid bedeckt ist, wobei an die Siliziumdioxidschicht eine Silanschicht gebunden ist, welche wenigstens zwei voneinander verschiedene bifunktionelle Silane oder davon abgeleitete Einheiten umfasst, dadurch gekennzeichnet, dass die wenigstens zwei voneinander verschiedenen bifunktionellen Silane ausgewählt sind aus einer Kombination von
- 3-Aminopropyltriethoxysilan und 3-Glycidyloxypropyltrimethoxysilan,
- 4-Aminobutyltriethoxysilan und 1,2-Epoxy-4(ethyltriethoxysilyl)-cyclohexan,
- 3-Aminopropyltriethoxysilan und N-(n-Butyl)-3-aminopropyltriethoxysilan,
- 3-Aminopropyltrimethoxysilan und N-(n-Butyl)-3-aminopropyltriethoxysilan,
- 3-Aminopropyltriethoxysilan und N-(n-Butyl)-3-aminopropyltrimethoxysilan,
- 3-Aminopropyltriethoxysilan und 3-Methacryloxypropyltrimethoxysilan,
- 3-Aminopropyltriethoxysilan und Vinyltriethoxysilan,
- 3-Aminopropyltriethoxysilan und 3-Isocyanatopropyltriethoxysilan,
- 3-Methacryloxypropyltriethoxysilan und 3-Isocyanatopropyltriethoxysilan,
- 3-Methacryloxypropyltrimethoxysilan und 3-Isocyanatopropyltrimethoxysilan, oder
- 6-Azidosulfonylhexyltriethoxysilan und 3-Aminopropyltriethoxysilan,
   noch bevorzugter
- 3-Aminopropyltriethoxysilan und N-(n-Butyl)-3-aminopropyltriethoxysilan,
- 3-Aminopropyltriethoxysilan und N-(n-Butyl)-3-aminopropyltrimethoxysilan,
- 6-Azidosulfonylhexyltriethoxysilan und 3-Aminopropyltriethoxysilan,
- 4-Aminobutyltriethoxysilan und 1,2-Epoxy-4(ethyltriethoxysilyl)-cyclohexan,
- 3-Methacryloxypropyltriethoxysilan und 3-Isocyanatopropyltriethoxysilan, oder
- 3-Methacryloxypropyltrimethoxysilan und 3-Isocyanatopropyltrimethoxysilan.

Für die Herstellung von Metalleffektpigmentpasten enthaltend modifizierte Metalleffektpigmente wird das Metalleffektpigment, das bedeckt ist mit mindestens einer Schicht aus einem Metalloxid, ausgewählt aus der Gruppe bestehend aus Siliciumdioxid, Aluminiumoxid, Titandioxid, Eisenoxid, Zinnoxid, Zinkoxid und Mischungen davon, in einem organischen Lösungsmittel, beispielsweise Methanol, Ethanol oder Isopropanol, vorzugsweise Ethanol oder Isopropanol oder einer Mischung aus einem organischen Lösungsmittel und Wasser, beispielsweise Isopropanol und Wasser oder Ethanol und Wasser suspendiert werden.

Falls eine Mischung aus einem organischen Lösungsmittel und Wasser verwendet wird, beinhaltet die Mischung vorzugsweise 30 bis 90 Volumenprozent organisches Lösungsmittel und 70 bis 10 Volumenprozent Wasser, stärker bevorzugt 50 bis 80 Volumenprozent organisches Lösungsmittel und 50 bis 20 Volumenprozent Wasser.

Das Suspendieren erfolgt unter Rühren und Erwärmen auf eine Temperatur im Bereich von 20°C bis 80°C, vorzugsweise im Bereich von 25°C bis 60° C, insbesondere bei etwa 60°C.

Anschließend werden wenigstens zwei voneinander verschiedene bifunktionelle Silane (wie oben definiert) zur Mischung zugegeben. Die Zugabe der wenigstens zwei voneinander verschiedenen bifunktionellen Silanen kann entweder gleichzeitig oder nacheinander erfolgen. Wenn die Zugabe der beiden Silane nacheinander erfolgt, kann die Zugabe in beliebiger Abfolge erfolgen. Beispielsweise kann für die Kombination von einem mit einem primären Amin funktionalisierten Silan und einem Nitrilsilan zuerst das Aminsilan und anschließend das Nitrilsilan oder umgekehrt zugegeben werden.

Die zwei voneinander verschiedenen bifunktionellen Silanen können zu der Mischung jeweils unabhängig voneinander in einer Menge von 0,01 bis 10 Gew.-%, bezogen auf das Gesamtgewicht von Metalleffektpigment mit Metalloxidschicht zugegeben werden. Vorzugsweise werden die Silane jeweils unabhängig voneinander in einer Menge im Bereich von 0,05 bis 5 Gew.-%, besonders bevorzugt in einer Menge im Bereich von 0,1 bis 1,5 Gew.-%, noch bevorzugter in einer Menge im Bereich von 0,3 bis 1,0 Gew.-% bezogen auf das Gesamtgewicht von Metalleffektpigment mit Metalloxidschicht zugegeben.

Üblicherweise liegt zwischen dem Ende der Zugabe des ersten Silans und dem Beginn der Zugabe des zweiten Silans ein Zeitraum von weniger als einer Stunde, vorzugsweise weniger als 30 Minuten, besonders bevorzugt weniger als 10 Minuten.

In einer bevorzugten Ausführungsform erfolgt anschließend das Einstellen eines basischen oder sauren pH-Werts. Vorzugsweise wird der pH-Wert auf einen basischen pH-Wert im Bereich von 8 bis 12, vorzugsweise 8,5 bis 11 eingestellt. Dies erfolgt üblicherweise durch Zugabe einer Base, wie beispielsweise einem Amin wie Triethylamin oder Ethylendiamin oder Ammoniak und gegebenenfalls Wasser. Alternativ kann die Zugabe der Base auch zeitgleich mit der Zugabe der bifunktionellen Silane erfolgen.

Anschließend wird die Mischung über einen Zeitraums von 10 Minuten bis 20 Stunden bei einer Temperatur in einem Bereich von 20°C bis 80°C gerührt. Vorzugsweise erfolgt das Rühren der Mischung über einen Zeitraum von 30 Minuten bis 3 Stunden, vorzugsweise etwa 1 Stunde lang bei einer Temperatur im Bereich von 25°C bis 60° C, bevorzugt bei etwa 60°C.

Nach Abkühlen auf Raumtemperatur, vorzugsweise 20°C, kann die Mischung mit einem geeigneten Lösungsmittel, beispielsweise Isopropanol, auf den gewünschten Feststoffgehalt eingestellt werden. Die Mischung kann auch nach Reaktionsende aufkonzentriert werden, und der erhaltene Filterpigmentkuchen kann entweder in einem geeigneten Lösungsmittel re-dispergiert werden, oder das Lösungsmittel entfernt werden. Vorzugsweise erfolgt eine Redispergierung, beispielsweise in Isopropanol.

Der Feststoffgehalt der modifizierten Metalleffektpigmentpaste kann im Bereich von 1 bis 80 Gew.-%, vorzugsweise im Bereich von 50 bis 70 Gew.-% liegen.
a) Zum Beispiel umfasst eine Ausführungsform des Verfahrens zur Herstellung einer Metalleffektpigmentpaste die folgenden Schritte:Suspendieren eines Metalleffektpigments, das bedeckt ist mit mindestens einer Schicht aus einem Metalloxid, ausgewählt aus der Gruppe bestehend aus Siliciumdioxid, Aluminiumoxid, Titandioxid, Eisenoxid, Zinnoxid, Zinkoxid und Mischungen davon, in einem organischen Lösungsmittel oder einer Mischung aus organischem Lösungsmittel und Wasser,
b) Rühren der Suspension unter Erwärmen auf eine Temperatur in einem Bereich von 20°C bis 80°C,
c) Zugabe von wenigstens zwei voneinander verschiedenen bifunktionellen Silanen, entweder gleichzeitig oder nacheinander zur Herstellung einer Mischung,
d) optional Einstellen eines basischen oder sauren pH-Werts durch Zugabe von Säure oder Base,
e) Rühren der Mischung über einen Zeitraums von 10 Minuten bis 20 Stunden bei einer Temperatur in einem Bereich von 20°C bis 80°C,
f) optional Abfiltrieren der Mischung zum Erhalt einer Metalleffektpigmentpaste, und
g) optional Einstellen eines Feststoffgehalts der Metalleffektpigmentpaste im Bereich von 50 bis 70 Gew.-% durch Zugabe von organischem Lösungsmittel oder Wasser,
wobei das Metalleffektpigment ausgewählt ist aus der Gruppe bestehend aus Aluminiumpigmenten, Titanpigmenten, Zirkoniumpigmenten, Kupferpigmenten, Zinkpigmenten, Goldpigmenten, Silberpigmenten, Siliziumpigmenten, Zinnpigmenten, Stahlpigmenten, Eisenpigmenten sowie Pigmenten aus Legierungen davon und wobei das Metalleffektpigment bedeckt ist mit mindestens einer Schicht aus einem Metalloxid, ausgewählt aus der Gruppe bestehend aus Siliciumdioxid, Aluminiumoxid, Titandioxid, Eisenoxid, Zinnoxid, Zinkoxid und Mischungen davon und
wobei die wenigstens zwei voneinander verschiedenen bifunktionellen Silane ausgewählt sind aus einer Kombination von
1) einem mit einem primären Amin funktionalisierten Silan und einem davon verschiedenen Silan, ausgewählt aus der Gruppe, bestehend aus (Meth)acryl-, Vinyl-, Cyano-, Hydroxyl-, Epoxy-, Isocyanat-, Mercapto-funktionalisiertem Silan und einem mit einem sekundären Amin funktionalisierten Silan ,
2) einem (Meth)acryl-funktionalisierten Silan und einem Isocyanat- oder Epoxy-funktionalisiertem Silan oder
3) einem Azid-funktionalisierten Silan und einem (Meth)acryl-, Vinyl-, Cyano-, Amin-, Hydroxyl-, Epoxy-, Isocyanat- oder Mercapto-funktionalisiertem Silan.

Ferner stellt die vorliegende Erfindung Verfahren wie in den Ansprüchen 6 bis 9 beschrieben zur Verfügung.

Die vorstehend beschriebenen modifizierten Metalleffektpigmente und Metalleffektpigmentpasten eignen sich zur Verwendung in Beschichtungszusammensetzungen, insbesondere bei der Herstellung von Lacken, Farben, Druckfarben, Kosmetika wie z.B. Nagellack oder Kunststoffen.

Diese weisen nach der Verarbeitung ausgezeichnete anwendungstechnische wie auch optische Eigenschaften auf, insbesondere mit einer sehr guten Abriebbeständigkeit und Schwitzwasserbeständigkeit in Kombination mit sehr guten metallischen Glanzeffekten.

Die erfindungsgemäße Verwendung umfasst dabei insbesondere Offset-Druckfarben, Siebdruckfarben (auch inMould Technology), Flexodruckfarben, Überdrucklacke, Tiefdruckfarben, Tintenstrahltinten, Digitaldruckfarben (wie Ink-Jet), wässrige Lacksysteme oder Kosmetika wie Nagellacken. Besonders eignen sich die erfindungsgemäßen Verwendungen auch zur Beschichtung von Kunststoffen, Holzteilen, Metallteilen, Glasteilen, als Coil & Can Coating, und zur Beschichtung von 3D-Bauteilen über eine dual-cure Härtung mit 2K PU-Systemen.

Die Einarbeitung und Vermischung der erfindungsgemäßen, modifizierten Pigmente in die Beschichtungssysteme erfolgt auf übliche, dem Fachmann geläufige Art. Insbesondere eignen sich Rührwerke mit Propeller- oder Flügelrührer zum Dispergieren und homogenen Vermischen der Pigmente in dem Beschichtungssystem. Die modifizierten Metalleffektpigmente können dabei zu einer im Wesentlichen fertigen Mischung gegeben werden, die bereits sämtliche Additive enthält, oder zu einem Vorprodukt, in das die modifizierten Metalleffektpigmente und anschließend die Additive eingemischt werden.

Die erfindungsgemäßen Metalleffektpigmente und -pasten zeigen überraschenderweise eine verbesserte Verträglichkeit mit einer Vielzahl von verschiedenen Bindemitteln. Damit wird die Anwendungsbreite von Metalleffektpigmenten vergrößert. Durch die Wahl geeigneter Kombinationen von bifunktionellen Silanen zur Modifizierung der Pigmente können diese sowohl in wasserbasierten also auch in lösungsmittelbasierten Systemen verwendet werden. Zudem ist ein Einsatz in Coil-Coating Anwendungen, UV-härtenden Systemen, thermisch oder chemisch vernetzbaren Systemen, wie Polyester, Polyurethan- oder Acrylatlacken, möglich.

Als UV-härtbare Beschichtungszusammensetzungen können übliche, dem Fachmann bekannte lösungsmittelhaltige UV/Hybridsysteme oder wässrige UV-Hybridsysteme sowie 100% lösungsmittelfreie Beschichtungssysteme eingesetzt werden. Solche Beschichtungssysteme enthalten üblicherweise Bindemittel (insbesondere Präpolymere), Lösemittel, Wasser, reaktive polymerisierbare Monomere (Reaktivverdünner), und Photoinitiatoren, oder nur Monomere, Präpolymere (Bindemittel) und Photoinitiatoren.

Als thermisch und/oder chemisch vernetzbare Beschichtungszusammensetzungen können übliche, dem Fachmann bekannte lösungsmittelhaltige oder wässrige Lacksysteme sowie 100% lösungsmittelfreie Beschichtungssysteme eingesetzt werden. Solche Beschichtungssysteme enthalten üblicherweise Bindemittel (insbesondere Präpolymere), Lösemittel, Wasser, reaktive polymerisierbare Monomere (Reaktivverdünner), und thermisch bzw. chemisch vernetzende Initiatoren, oder nur Monomere, Präpolymere (Bindemittel) und thermisch bzw. chemisch vernetzende Initiatoren.

Als UV-härtbare, thermisch und/oder chemisch vernetzbare Bindemittel können übliche, dem Fachmann bekannte Bindemittel eingesetzt werden, wobei sich sowohl radikalisch polymerisierbare als auch kationisch polymerisierbare Bindemittel eignen. Beispiele für radikalische polymerisierbare Bindemittel sind insbesondere Acrylat- oder Methacrylat-funktionelle Polymere, Präpolymere oder Oligomere wie Polyester(meth)acrylate, Polyether(meth)acrylate, Amino(meth)acrylate, (Meth)acrylcopolymere, Polyurethan(meth)acrylate, Epoxidharz(meth)acrylate. Vorzugsweise enthalten die Bindemittel 2 bis 20 polymerisierbare olefinische Doppelbindungen pro Molekül. Besonders bevorzugt sind 2 bis 6. Beispiele für kationisch polymerisierbare Bindemittel sind insbesondere Epoxyoligomere, wie beispielsweise Glycerintriglycidylether, Polyalkylenglykoldiglycidylether, und Epoxyurethanharze. Weitere Beispiele für Bindemittel sind Melaminharz-Systeme, Alkydharze, Siliconharze, Cellulose-Bindemittel sowie Epoxidharze. Die Bindemittel werden in üblichen, dem Fachmann geläufigen Mengen eingesetzt, insbesondere in Mengen bis zu 50 Gew.-% der Beschichtungszusammensetzung, vorzugsweise bis 15 Gew.-%.

Die die erfindungsgemäßen modifizierten Metalleffektpigmente oder Metalleffektpigmentpasten enthaltenden Beschichtungssysteme können UVhärtende Monomere, die auch als Reaktivverdünner bezeichnet werden, enthalten. Hierunter werden Moleküle verstanden die eine oder mehrere reaktive Kohlenstoff-Kohlenstoff-Mehrfachbindungen besitzen. Als Reaktivverdünner können übliche, dem Fachmann bekannte Monomere eingesetzt werden. In einer bevorzugten Ausführungsform sind dies Acrylatmonomere, Methacrylatmonomere oder Vinylmonomere. Beispiele für mehrfachfunktionelle Acrylate bzw. Methacrylate, die im Bindemittel eingesetzt werden können, sind: Tetraethylenglycoldiacrylat, Triethylenglycoldiacrylat, Tetraethylenglacoldimethacrylat, Triethylenglycol dimethacrylat, Polyethylenglycol-400-diacrylat, 2,2'-Bis(4-acryloxyethoxyphenyl)propan, Ethylenglycoldimethacrylat, Diethylenglycol dimethacrylat, 1,6-Hexandioldimethacrylat, 1,6-Hexandioldiacrylat, 1,12-Dodecandioldimethacrylat, Neopentylglycoldimethacrylat und Trimethylolpropantrimethacrylat. Beispiele für Vinylmonomere sind Vinylether etc. Die Reaktivverdünner können bis zu 95 Gew.-%, vorzugsweise 30 bis 80% der Beschichtungszusammensetzung ausmachen.

Die die erfindungsgemäßen modifizierten Metalleffektpigmente oder Metalleffektpigmentpasten enthaltenden Beschichtungssysteme können auch übliche, dem Fachmann bekannte UV-Photoinitiatoren enthalten. Beispiele für radikalisch härtende Systeme sind Benzophenon und Derivate davon, Benzoin und Derivate davon, Acetophenon und Derivate davon, Anthrachinon, Thioxanthon und Derivate davon, oder auch phosphororganische Verbindungen. Beispiele für kationisch härtende Systeme sind Oniumsalze, insbesondere Diazoniumsalze, Sulfoniumsalze, oder Jodoniumsalze. Die Photoinitiatoren werden in üblichen, dem Fachmann geläufigen Mengen eingesetzt, insbesondere in Mengen 0,5 bis 15 Gew.-% der Beschichtungszusammensetzung, vorzugsweise 2 bis 10 Gew.-%.

Neben diesen Verbindungen können die erfindungsgemäßen modifizierten Metalleffektpigmente oder Metalleffektpigmentpasten enthaltenden Beschichtungszusammensetzungen übliche Polymerisationsinhibitoren, übliche Füllstoffe, weitere Pigmente, und übliche Additive enthalten, wie sie in der Lackindustrie oder der Druckfarbenindustrie eingesetzt werden. Als Pigmente eignen sich auch noch Ruß, Schichtsilikate, Titandioxid, Buntpigmente, Calciumcarbonat und Kaolin, und als Füllstoffe eignen sich beispielsweise Siliciumdioxid oder Aluminiumsilikat. Als Additive können übliche Additive aus der Lackindustrie oder Druckfarbenindustrie eingesetzt werden, insbesondere Dispergiermittel, Redispergiermittel, Polymerisationsinhibitoren, Antischaummittel, Katalysatoren, Haftvermittler, Verlaufsmittel, Verdickungsmittel oder Mattierungsmittel.

Die erfindungsgemäßen Lacke und Farben können je nach Anwendung unterschiedliche Pigmentgehalte aufweisen, wie dem Fachmann bekannt. Besonders bevorzugt liegt der Pigmentgehalt im Bereich von 2-45 Gew.-%.

Die modifizierten Metalleffektpigmente oder Metalleffektpigmentpasten können in thermisch bzw. chemisch vernetzenden Lacken oder Druckfarben, sowie in UV-Lacken oder UV-Druckfarben je nach Druckverfahren und Pigmenttyp in verschiedenen Mengen eingesetzt werden. Für Druckfarben bzw. Tinten sind in der folgenden Tabelle beispielhaft bevorzugte Gewichts-% Pigment pro Gesamtgewicht Lack bzw. Tinte zu entnehmen. Lacke enthalten in Abhängigkeit vom Pigmenttyp vorzugsweise 2-10 Gewichts-% an Aluminiumpigmenten, 0,1 bis 1,5 Gewichts-% an Decomet-Pigmenten oder 3 bis 30 Gewichts-% an Goldbronze-Pigmenten.

| **Printing Process** | **Goldbronze** | **Aluminium** | **DECOMET®** |
|---|---|---|---|
| Flexodruck | 35 - 40 | 15 - 20 | 2,5 - 4,0 |
| Tiefdruck | 30 - 35 | 10 - 12 | 2,5 - 4,0 |
| Siebdruck | 35 - 40 | 15 - 20 | 4,0 - 6,0 |
| Offset | 30 - 45 | 15 - 25 | 2,5 - 5,0 |
| **Lacke** | 3 - 30 | 2 - 10 | 0,1 - 1,5 |

Es versteht sich, dass die vorstehend genannten und die nachstehend noch zu erläuternden Merkmale nicht nur in den angegebenen Kombinationen, sondern auch in andere Kombinationen oder in Alleinstellung einsetzbar sind, ohne den Rahmen der vorliegenden Erfindung zu verlassen. Insbesondere gilt dies für die konkret genannten bifunktionellen Silane und deren Kombinationen, Metalleffektpigmente, Metalloxidschichten, Bindemittel, Monomere und deren jeweiligen Mengen, deren verschiedene Kombinationen als erfindungsgemäß offenbart anzusehen sind.

Im Folgenden wird die Erfindung durch die nachfolgenden Beispiele näher erläutert.

### Beispiele

### Beispiel 1

100 g SiO₂-beschichtetes Aluminiumpigment Powdal 7400 der Firma Schlenk Metallic Pigments GmbH werden in 400 g Isopropanol suspendiert und unter Rühren auf 60°C erwärmt. Im Anschluss werden kurz hintereinander 0.5 g Dynasylan AMEO (Aminopropyltriethoxysilan, APTES), 0.5 g Dynasylan 6030 (Methacryloxypropyltrimethoxysilan, MTMS) (beides Evonik) und 6 g Ammoniak (25% in H₂O) zugegeben. Die Mischung wird für eine Stunde bei 60°C gerührt und anschließend abfiltriert. Der Filterkuchen wird im Anschluss auf einen Festkörperanteil von 60% eingestellt. Mit dieser Paste werden im Anschluss die anwendungstechnischen Prüfungen durchgeführt.

### Beispiel 2

100 g SiO₂-beschichtetes Aluminiumpigment Powdal 7400 der Firma Schlenk Metallic Pigments GmbH werden in 400 g Isopropanol suspendiert und unter Rühren auf 60°C erwärmt. Im Anschluss werden kurz hintereinander 0.5 g Dynasylan GLYMO (Epoxysilan), 0.5 g Dynasylan 6030 (MTMS) (beides Evonik) und 6 g Ammoniak (25% in H₂O) zugegeben. Die Mischung wird für eine Stunde bei 60°C gerührt und anschließend abfiltriert. Der Filterkuchen wird im Anschluss auf einen Festkörperanteil von 60% eingestellt. Mit dieser Paste werden im Anschluss die anwendungstechnischen Prüfungen durchgeführt.

### Beispiel 3

100 g SiO₂-beschichtetes Aluminiumpigment Powdal 2900 der Firma Schlenk Metallic Pigments GmbH werden in 400 g Isopropanol suspendiert und unter Rühren auf 60°C erwärmt. Im Anschluss werden kurz hintereinander 0.5 g Dynasylan 6030 (MTMS), 0.5 g Triethoxysilylpropylisocyanat (3-Isocyanatopropyltriethoxysilan; Aldrich) und 6 g Ammoniak (25% in H₂O) zugegeben. Die Mischung wird für eine Stunde bei 60°C gerührt und anschließend abfiltriert. Der Filterkuchen wird im Anschluss auf einen Festkörperanteil von 60% eingestellt.

### Vergleichsbeispiel A:

100 g SiO₂-beschichtetes Aluminiumpigment Powdal 7400 der Firma Schlenk Metallic Pigments GmbH werden in 400 g Isopropanol suspendiert und unter Rühren auf 60°C erwärmt. Im Anschluss werden kurz hintereinander 0.5 g Dynasylan AMEO (APTES) und 6 g Ammoniak (25% in H₂O) zugegeben. Die Mischung wird für eine Stunde bei 60°C gerührt und anschließend abfiltriert. Der Filterkuchen wird im Anschluss auf einen Festkörperanteil von 60% eingestellt. Mit dieser Paste werden im Anschluss die oben beschriebenen anwendungstechnischen Prüfungen durchgeführt.

### Vergleichsbeispiel B:

100 g SiO₂-beschichtetes Aluminiumpigment Powdal 7400 der Firma Schlenk Metallic Pigments GmbH werden in 400 g Isopropanol suspendiert und unter Rühren auf 60°C erwärmt. Im Anschluss werden kurz hintereinander 0.5 g Dynasylan 6030 (MTMS) und 6 g Ammoniak (25% in H₂O) zugegeben. Die Mischung wird für eine Stunde bei 60°C gerührt und anschließend abfiltriert. Der Filterkuchen wird im Anschluss auf einen Festkörperanteil von 60% eingestellt. Mit dieser Paste werden im Anschluss die oben beschriebenen anwendungstechnischen Prüfungen durchgeführt.

### Vergleichsbeispiel C:

100 g SiO₂-beschichtetes Aluminiumpigment Powdal 7400 der Firma Schlenk Metallic Pigments GmbH werden in 400 g Isopropanol suspendiert und unter Rühren auf 60°C erwärmt. Im Anschluss werden kurz hintereinander 0.5 g Dynasylan GLYMO (Epoxysilan) und 6 g Ammoniak (25% in H₂O) zugegeben. Die Mischung wird für eine Stunde bei 60°C gerührt und anschließend abfiltriert. Der Filterkuchen wird im Anschluss auf einen Festkörperanteil von 60% eingestellt. Mit dieser Paste werden die unten beschriebenen anwendungstechnischen Prüfungen durchgeführt.

### Prüfung Schwitzwassertest (SWT):

Hierbei wird eine Zweischichtapplikation auf Herbertsblechen durchgeführt. Dazu wird mit den jeweiligen Pasten ein Lack mit einem Metallpigmentanteil von 6 Gew.-% hergestellt. Der Basislack ist ein wässriges 1K Acrylat-PU System. Die Schichtstärke der applizierten und gehärteten Schicht beträgt zwischen 12-15 µm. Nach Trocknung der Panels bei 140°C wird das Panel einen Tag ruhen gelassen und anschließend wird der Klarlack appliziert. Der Klarlack ist ein konventioneller 1K Acrylat Lack und wird bei 140°C eingebrannt. Die Schichtstärke beträgt zwischen 17 - 20 µm. Die Prüfbleche werden für 240 h einer gesättigten Wasserdampfatmosphäre bei einer Temperatur von 40°C ausgesetzt. Nach 10 Tagen Temperatur und Feuchtigkeitseinwirkung erfolgt die optische und technische Beurteilung nachdem die Bleche für 1 h ruhen gelassen worden sind.

Anschließend wird die Haftung durch die Gitterschnittprüfung nach EN ISO 2409 geprüft. GT0 einspricht einem guten Ergebnis, d. h. einer sehr guten Haftung. GT5 steht für eine deutliche Ablösung der Lackschicht (Adhäsionsbruch oder auch Kohäsionbruch), also eine sehr schlechte Haftung.

### Prüfung Tesa-Test im PVB-Svstem:

Eine Druckfarbe aus 25% der Metallpigmentpaste (60%ig), 5% Isopropanol und 70% Mowithal B 30 (15% in EtOH) wird auf einem gestrichenem Rakelpapier mit einem 24 µm Rakel aufgebracht und im Anschluss die Rakelung 24 h bei Raumtemperatur getrocknet. Im Anschluss wird ein Tesa-Test durchgeführt, welcher die Spaltfestigkeit der Druckfarbe prüft. Hierbei wird ein Tesa-Klebeband auf die Druckfarbenschicht aufgeklebt, durch zweimaliges Darüberstreichen festgedrückt und im Anschluss wieder abgezogen. Beurteilt wird, wie viel der Druckfarbe am Klebefilm verbleibt. Hier steht 5 für ein sehr gutes Ergebnis und 1 für ein schlechtes Ergebnis. Dies erfolgt nach der Norm ISO105-AO3; 1993, DIN EN 20105-A03; 1994.

### Prüfung Tesa-Test in der UV-Druckfarbe:

Es wird eine Druckfarbe aus 25% Paste (Festkörpergehalt 60%ig) und 75% Firnis Flexo UV VP/12213 hergestellt. Die weitere Vorgehensweise entspricht der Beschreibung der Prüfung des Tesa-Tests im PVB-System. Im Anschluss wird der Tesa-Test durchgeführt, welcher die Spaltfestigkeit der Druckfarbe prüft. Hier steht 5 für ein sehr gutes Ergebnis und 1 für ein schlechtes Ergebnis. Die Beurteilung erfolgt nach ISO105-AO3; 1993, DIN EN 20105-AO3; 1994.

### Prüfung Abriebtest in der UV-Druckfarbe:

Es wird eine Druckfarbe aus 25% Paste (Festkörpergehalt 60%ig) und 75% Firnis Flexo UV VP/12213 hergestellt. Dann wird analog der Vorgehensweise des Tesa-Tests eine Rakelung angefertigt. Der weitere Prüfablauf erfolgt analog ISO105-AO3; 1993, DIN EN 20105-AO3; 1994, wobei die Beurteilung nach dem Graumaßstab zur Bewertung des Anblutens erfolgt. Hier steht 5 für ein sehr gutes Ergebnis und 1 für ein schlechtes Ergebnis.

In der folgenden Tabelle 1 sind die Ergebnisse des Schwitzwassertests und des Abriebtests der erfindungsgemäßen Beispiele und der Vergleichsbeispiele aufgeführt.

**Tabelle 1**

| | SWT nach 240 h Belastung | Abriebtest in der UV-Druckfarbe |
|---|---|---|
| Beispiel 1 | GT1 | 5 |
| Vergleichsbeispiel A | GT1 | 3 |
| Vergleichsbeispiel B | GT3 | 5 |

In der folgenden Tabelle 2 sind die Ergebnisse der des Schwitzwassertests und des Tesa-Tests der erfindungsgemäßen Beispiele und der Vergleichsbeispiele aufgeführt.

**Tabelle 2**

| | SWT nach 240 h Belastung | Tesa-Test im PVB-System | Tesa-Test in der UV-Druckfarbe |
|---|---|---|---|
| Beispiel 2 | GT1 | 5 | 5 |
| Vergleichsbeispiel B | GT3 | 3 | 5 |
| Vergleichsbeispiel C | GT1 | 5 | 2 |

Die vorstehenden Beispiele zeigen eindeutig, dass die erfindungsgemäße Kombination von zwei voneinander verschiedenen bifunktionellen Silanen den einzelnen bifunktionellen Silanen deutlich überlegen ist in Bezug auf Schwitzwasserbeständigkeit, Abriebfestigkeit und Haftungseigenschaften.

## Patentansprüche

1. Modifiziertes Metalleffektpigment, wobei das modifizierte Metalleffektpigment ein Metalleffektpigment ist, welches bedeckt ist mit mindestens einer Schicht aus einem Metalloxid, ausgewählt aus der Gruppe bestehend aus Siliciumdioxid, Aluminiumoxid, Titandioxid, Eisenoxid, Zinnoxid, Zinkoxid und Mischungen davon, wobei an diese Schicht eine Silanschicht gebunden ist, welche wenigstens zwei voneinander verschiedene bifunktionelle Silane oder davon abgeleitete Einheiten umfasst, **dadurch gekennzeichnet, dass**
die wenigstens zwei voneinander verschiedenen bifunktionellen Silane ausgewählt sind aus einer Kombination von
1) einem mit einem primären Amin funktionalisierten Silan und einem davon verschiedenen Silan, ausgewählt aus der Gruppe, bestehend aus (Meth)acryl-, Vinyl-, Cyano-, , Hydroxyl-, Epoxy-, Isocyanat-, Mercapto-funktionalisiertem Silan und einem mit einem sekundären Amin funktionalisierten Silan,
2) einem (Meth)acryl-funktionalisierten Silan und einem Isocyanat- oder Epoxy-funktionalisiertem Silan oder
3) einem Azid-funktionalisierten Silan und einem (Meth)acryl-, Vinyl-, Cyano-, Amin-, Hydroxyl-, Epoxy-, Isocyanat- oder Mercapto-funktionalisiertem Silan.

2. Modifiziertes Metalleffektpigment gemäß Anspruch 1, wobei das Metalloxid ausgewählt ist aus der Gruppe bestehend aus Siliciumdioxid, Aluminiumoxid, Eisenoxid, Zinnoxid, Zinkoxid und Mischungen davon, und vorzugsweise Siliciumdioxid ist.

3. Modifiziertes Metalleffektpigment gemäß Anspruch 1 oder 2, wobei in der Silanschicht neben den wenigstens zwei voneinander verschiedenen bifunktionellen Silanen kein Alkylsilan in derselben Schicht vorliegt, und/oder wobei das modifizierte Metalleffektpigment keine weitere Schicht aus einem oder mehreren organischen Polymeren aufweist.

4. Modifiziertes Metalleffektpigment gemäß einem der Ansprüche 1 bis 3, wobei das Metalleffektpigment ausgewählt ist aus der Gruppe bestehend aus Aluminiumpigmenten, Titanpigmenten, Zirkoniumpigmenten, Kupferpigmenten, Zinkpigmenten, Goldpigmenten, Silberpigmenten, Siliziumpigmenten, Zinnpigmenten, Stahlpigmenten, Eisenpigmenten sowie Pigmenten aus Legierungen davon, und Mischungen davon.

5. Modifiziertes Metalleffektpigment gemäß einem der Ansprüche 1 bis 4, wobei das Amin-funktionalisierte Silan ein mit wenigstens einer primären oder sekundären Amingruppe funktionalisiertes Silan ist und vorzugsweise ausgewählt ist aus der Gruppe bestehend aus:
3-Aminopropyltriethoxysilan, 3-Aminopropyltrimethoxysilan, 4-Aminobutyltriethoxysilan, 3-Aminopropyltris(methoxyethoxyethoxy)silan, 11-Aminoundecyltriethoxysilan, 3-Aminopropylsilantriol, 3-Aminopropylmethyldiethoxysilan, 3-Aminopropyldiisopropylethoxysilan, 3-Aminopropyldimethylethoxysilan, N-Aminoethylaminopropyltrimethoxysilan, N-Aminoethyl-3-aminopropyltriethoxysilan, N-Aminohexyl-2-aminomethyltriethoxysilan, N-Aminohexylaminomethyltrimethoxysilan, N-Aminoethyl-11-aminoundecyltrimethoxysilan, (Aminomethylaminomethyl)phenethyltrimethoxysilan, N-Aminoethyl-3-aminopropylsilantriol, N-Aminoethyl-3-aminopropylmethyldimethoxysilan, N-Aminoethylaminoisobutylmethyldimethoxysilan, (Aminoethylamino)isobutyldimethylmethoxysilan, (Trimethoxysilylpropyl)diethylentriamin, N-Methyl-3-aminopropyltrimethoxysilan, N-Ethylaminoisobutyltrimethoxysilan, N-(n-Butyl)-3-aminopropyltrimethoxysilan, N-(n-Butyl)-3-aminopropyltriethoxysilan, N-(n-Propyl)-3-aminopropyltriethoxysilan N-(n-Propyl)-3-aminopropyltrimethoxysilan, N-Phenyl-3-aminopropyltrimethoxysilan, N-Allyl-3-aminopropyltrimetoxysilan, N-Ethylaminoisobutylmethyldiethoxysilan und N-Methyl-3-aminopropylmethyldimethoxysilan,
das (Meth)acryl-funktionalisierte Silan ausgewählt ist aus der Gruppe bestehend aus:
3-Methacryloxypropyltrimethoxysilan, 3-Methacryloxypropyltriethoxysilan, 2-Methacryloxyethyltrimethoxysilan, 2-Methacryloxyethyltriethoxysilan, 3-Methacryloxypropyltris(methoxyethoxy)silan, 3-Meth-acryloxypropyltris(butoxyethoxy)silan, 3-Methacryloxypropyltris(propoxy)silan, 3-Methacryloxypropyltris(butoxy)silan, 3-Acryloxypropyltrimethoxysilan, 2-Acryloxyethyltrimethoxysilan, 3-Acryloxypropyltrimethoxysilan, 2-Acryloxy-ethyltriethoxysilan, 3-Acryloxypropyltris(methoxy-ethoxy)silan, 3-Acryloxypropyltris(butoxyethoxy)silan, 3-Acryloxypropyl-tris(propoxy)silan und 3-Acryloxypropyltris(butoxy)silan,
das Vinyl-funktionalisierte Silan ausgewählt ist aus der Gruppe bestehend aus:
Vinyltrimethoxysilan, Vinyltriethoxysilan, Vinylethyldichlorsilan, Vinylmethyldiacetoxysilan, Vinylmethyldichlorsilan, Vinyl-methyldiethoxysilan, Vinyltriacetoxysilan und Vinyltrichlorsilan,
das Cyano-funktionalisierte Silan ausgewählt ist aus der Gruppe bestehend aus: 3-Cyanopropyltriethoxysilan, 3-Cyanopropyltrimethoxysilan und 2-Cyanoethyltrimethoxysilane,
das Isocyanat-funktionalisierte Silan ausgewählt ist aus der Gruppe bestehend aus: 3-Isocyanatopropyltriethoxysilan und 3-Isocyanatopropyltrimethoxysilan,
Mercapto-funktionalisierte Silan ausgewählt ist aus der Gruppe bestehend aus: 3-Mercaptopyltriethoxysilan, 3-Octanoylthio-1-propyltriethoxysilan und 3-Mercaptopropyltrimethoxysilan,
das Epoxy-funktionalisierte Silan ausgewählt ist aus der Gruppe bestehend aus: 3-Glycidyloxypropyltrimethoxysilan, beta-(3,4-Epoxycyclohexyl)ethyltrimethoxysilan und 1,2-Epoxy-4(ethyltriethoxysilyl)cyclohexan, und/oder
das Azid-funktionalisierte Silan ausgewählt ist aus der Gruppe bestehend aus: 6-Azidosulfonylhexyltriethoxysilan und (Azidomethyl)phenethyltrimethoxysilan.

6. Verfahren zur Herstellung einer Metalleffektpigmentpaste, die das modifizierte Metalleffektpigment nach einem der Ansprüche 1 bis 5 enthält, umfassend die Schritte:
a) Suspendieren eines Metalleffektpigments, das bedeckt ist mit mindestens einer Schicht aus einem Metalloxid, ausgewählt aus der Gruppe bestehend aus Siliciumdioxid, Aluminiumoxid, Titandioxid, Eisenoxid, Zinnoxid, Zinkoxid und Mischungen davon, in einem organischen Lösungsmittel oder einer Mischung aus organischem Lösungsmittel und Wasser,
b) Rühren der Suspension unter Erwärmen auf eine Temperatur in einem Bereich von 20°C bis 80°C,
c) Zugabe von wenigstens zwei voneinander verschiedenen bifunktionellen Silanen, entweder gleichzeitig oder nacheinander zur Herstellung einer Mischung,
d) optional Einstellen eines basischen oder sauren pH-Werts durch Zugabe von Säure oder Base,
e) Rühren der Mischung über einen Zeitraums von 10 Minuten bis 20 Stunden bei einer Temperatur in einem Bereich von 20°C bis 80°C,
f) optional Abfiltrieren der Mischung zum Erhalt einer Metalleffektpigmentpaste, und
g) optional Einstellen eines Feststoffgehalts der Metalleffektpigmentpaste im Bereich von 50 bis 70 Gew.-% durch Zugabe von organischem Lösungsmittel oder Wasser,
wobei das Metalleffektpigment ausgewählt ist aus der Gruppe bestehend aus Aluminiumpigmenten, Titanpigmenten, Zirkoniumpigmenten, Kupferpigmenten, Zinkpigmenten, Goldpigmenten, Silberpigmenten, Siliziumpigmenten, Zinnpigmenten, Stahlpigmenten, Eisenpigmenten sowie Pigmenten aus Legierungen davon und wobei das Metalleffektpigment bedeckt ist mit mindestens einer Schicht aus einem Metalloxid, ausgewählt aus der Gruppe bestehend aus Siliciumdioxid, Aluminiumoxid, Titandioxid, Eisenoxid, Zinnoxid, Zinkoxid und Mischungen davon und
wobei die wenigstens zwei voneinander verschiedenen bifunktionellen Silane ausgewählt sind aus einer Kombination von
1) einem mit einem primären Amin funktionalisierten Silan und einem davon verschiedenen Silan, ausgewählt aus der Gruppe, bestehend aus (Meth)acryl-, Vinyl-, Cyano-, Hydroxyl-, Epoxy-, Isocyanat-, Mercapto-funktionalisiertem Silan und einem mit einem sekundären Amin funktionalisierten Silan ,
2) einem (Meth)acryl-funktionalisierten Silan und einem Isocyanat- oder Epoxy-funktionalisiertem Silan oder
3) einem Azid-funktionalisierten Silan und einem (Meth)acryl-, Vinyl-, Cyano-, Amin-, Hydroxyl-, Epoxy-, Isocyanat- oder Mercapto-funktionalisiertem Silan.

7. Verfahren gemäß Anspruch 6, wobei das Metalloxid ausgewählt ist aus der Gruppe bestehend aus Siliciumdioxid, Aluminiumoxid, Eisenoxid, Zinnoxid, Zinkoxid und Mischungen davon, und vorzugsweise Siliciumdioxid ist.

8. Verfahren gemäß Anspruch 6 oder 7, wobei
das Rühren der Suspension in Schritt b) unter Erwärmen auf eine Temperatur im Bereich von 25°C bis 60° C, bevorzugt bei etwa 60°C erfolgt.

9. Verfahren gemäß einem der Ansprüche 6 bis 8, wobei
in Schritt d) durch Zugabe von wässriger basischen Lösung ein pH-Wert im Bereich von 8 bis 11, vorzugsweise 8,5 bis 9,5 eingestellt wird.

10. Verfahren gemäß Anspruch 9, wobei
die wässriger basische Lösung eine wässrige Lösung von Ammoniak, Triethylamin oder Ethylendiamin ist.

11. Verfahren gemäß einem der Ansprüche 6 bis 10, wobei
das Rühren der Mischung in Schritt e) über einen Zeitraums von 30 Minuten bis 3 Stunden, vorzugsweise etwa 1 Stunde lang bei einer Temperatur im Bereich von 25°C bis 60° C, bevorzugt bei etwa 60°C erfolgt.

12. Verwendung eines modifizierten Metalleffektpigments nach einem der Ansprüche 1 bis 5 in einer Beschichtungszusammensetzung.

13. Verwendung gemäß Anspruch 12, **dadurch gekennzeichnet, dass** es sich bei der Beschichtungszusammensetzung um Lacke, Farben, Druckfarben, Nagellack, Tinten, Oberflächenbeschichtungen oder Kunststoffe handelt.

## Claims

1. Modified metal effect pigment, wherein the modified metal effect pigment is a metal effect pigment which is covered with at least one layer of a metal oxide selected from the group consisting of silicon dioxide, aluminium oxide, titanium dioxide, iron oxide, tin oxide, zinc oxide and mixtures thereof, wherein a silane layer, which comprises at least two bifunctional silanes different from each other or units derived from same, is bonded to this layer, **characterized in that**
the at least two bifunctional silanes different from each other are selected from a combination of
1) a silane functionalized with a primary amine and a silane different therefrom, selected from the group consisting of (meth)acryl-, vinyl-, cyano-, hydroxyl-, epoxy-, isocyanate-, mercapto-functionalized silane, and a silane functionalized with a secondary amine,
2) a (meth)acryl-functionalized silane and an isocyanate- or epoxy-functionalized silane or
3) an azide-functionalized silane and a (meth)acryl-, vinyl-, cyano-, amine-, hydroxyl-, epoxy-, isocyanate- or mercapto-functionalized silane.

2. Modified metal effect pigment according to claim 1, wherein the metal oxide is selected from the group consisting of silicon dioxide, aluminium oxide, iron oxide, tin oxide, zinc oxide and mixtures thereof, and is preferably silicon dioxide.

3. Modified metal effect pigment according to claim 1 or 2, wherein, apart from the at least two bifunctional silanes different from each other in the silane layer, no alkyl silane is present in the same layer, and/or wherein the modified metal effect pigment has no further layer of one or more organic polymers.

4. Modified metal effect pigment according to one of claims 1 to 3, wherein the metal effect pigment is selected from the group consisting of aluminium pigments, titanium pigments, zirconium pigments, copper pigments, zinc pigments, gold pigments, silver pigments, silicon pigments, tin pigments, steel pigments, iron pigments as well as pigments of alloys thereof, and mixtures thereof.

5. Modified metal effect pigment according to one of claims 1 to 4, wherein the amine-functionalized silane is a silane functionalized with at least one primary or secondary amine group and is preferably selected from the group consisting of:
3-aminopropyltriethoxysilane, 3-aminopropyltrimethoxysilane, 4-aminobutyltriethoxysilane, 3-aminopropyltris(methoxyethoxyethoxy)silane, 11-aminoundecyltriethoxysilane, 3-aminopropylsilanetriol, 3-aminopropylmethyldiethoxysilane, 3-aminopropyldiisopropylethoxysilane, 3-aminopropyldimethylethoxysilane, N-aminoethylaminopropyltrimethoxysilane, N-aminoethyl-3-aminopropyltriethoxysilane, N-aminohexyl-2-aminomethyltriethoxysilane, N-aminohexylaminomethyltrimethoxysilane, N-aminoethyl-11-aminoundecyltrimethoxysilane, (aminomethylaminomethyl)phenethyltrimethoxysilane, N-aminoethyl-3-aminopropylsilanetriol, N-aminoethyl-3-aminopropylmethyldimethoxysilane, N-aminoethylaminoisobutylmethyldimethoxysilane, (aminoethylamino)isobutyldimethylmethoxysilane, (trimethoxysilylpropyl)diethylenetriamine, N-methyl-3-aminopropyltrimethoxysilane, N-ethylaminoisobutyltrimethoxysilane, N-(n-butyl)-3-aminopropyltrimethoxysilane, N-(n-butyl)-3-aminopropyltriethoxysilane, N-(n-propyl)-3-aminopropyltriethoxysilane, N-(n-propyl)-3-aminopropyltrimethoxysilane, N-phenyl-3-aminopropyltrimethoxysilane, N-allyl-3-aminopropyltrimethoxysilane, N-ethylaminoisobutylmethyldiethoxysilane and N-methyl-3-aminopropylmethyldimethoxysilane,
the (meth)acryl-functionalized silane is selected from the group consisting of: 3-methacryloxypropyltrimethoxysilane, 3-methacryloxypropyltriethoxysilane, 2-methacryloxyethyltrimethoxysilane, 2-methacryloxyethyltriethoxysilane, 3-methacryloxypropyltris(methoxyethoxy)silane, 3-methacryloxypropyltris(butoxyethoxy)silane, 3-methacryloxypropyltris(propoxy)silane, 3-methacryloxypropyltris(butoxy)silane, 3-acryloxypropyltrimethoxysilane, 2-acryloxyethyltrimethoxysilane, 3-acryloxypropyltrimethoxysilane, 2-acryloxyethyltriethoxysilane, 3-acryloxypropyltris(methoxyethoxy)silane, 3-acryloxypropyltris(butoxyethoxy)silane, 3-acryloxypropyltris(propoxy)silane and 3-acryloxypropyltris(butoxy)silane,
the vinyl-functionalized silane is selected from the group consisting of: vinyltrimethoxysilane, vinyltriethoxysilane, vinylethyldichlorosilane, vinylmethyldiacetoxysilane, vinylmethyldichlorosilane, vinylmethyldiethoxysilane, vinyltriacetoxysilane and vinyltrichlorosilane,
the cyano-functionalized silane is selected from the group consisting of: 3-cyanopropyltriethoxysilane, 3-cyanopropyltrimethoxysilane and 2-cyanoethyltrimethoxysilane,
the isocyanate-functionalized silane is selected from the group consisting of: 3-isocyanatopropyltriethoxysilane and 3-isocyanatopropyltrimethoxysilane,
the mercapto-functionalized silane is selected from the group consisting of: 3-mercaptopropyltriethoxysilane, 3-octanoylthio-1-propyltriethoxysilane and 3-mercaptopropyltrimethoxysilane,
the epoxy-functionalized silane is selected from the group consisting of: 3-glycidyloxypropyltrimethoxysilane, beta-(3,4-epoxycyclohexyl)ethyltrimethoxysilane and 1,2-epoxy-4(ethyltriethoxysilyl)cyclohexane, and/or
the azide-functionalized silane is selected from the group consisting of: 6-azidosulfonylhexyltriethoxysilane and (azidomethyl)phenethyltrimethoxysilane.

6. Process for the production of a metal effect pigment paste which contains the modified metal effect pigment according to one of claims 1 to 5, comprising the steps:
a) suspending a metal effect pigment which is covered with at least one layer of a metal oxide selected from the group consisting of silicon dioxide, aluminium oxide, titanium dioxide, iron oxide, tin oxide, zinc oxide and mixtures thereof, in an organic solvent or a mixture of an organic solvent and water,
b) stirring the suspension while heating to a temperature in a range of from 20°C to 80°C,
c) adding at least two bifunctional silanes different from each other, either simultaneously or sequentially, to prepare a mixture,
d) optionally setting a basic or acidic pH by adding acid or base,
e) stirring the mixture for a period of from 10 minutes to 20 hours at a temperature in a range of from 20°C to 80°C,
f) optionally filtering off the mixture to obtain a metal effect pigment paste, and
g) optionally setting a solids content of the metal effect pigment paste in the range of from 50 to 70 wt.-% by adding organic solvent or water,
wherein the metal effect pigment is selected from the group consisting of aluminium pigments, titanium pigments, zirconium pigments, copper pigments, zinc pigments, gold pigments, silver pigments, silicon pigments, tin pigments, steel pigments, iron pigments as well as pigments of alloys thereof, and wherein the metal effect pigment is covered with at least one layer of a metal oxide selected from the group consisting of silicon dioxide, aluminium oxide, titanium dioxide, iron oxide, tin oxide, zinc oxide and mixtures thereof and
wherein the at least two bifunctional silanes different from each other are selected from a combination of
1) a silane functionalized with a primary amine and a silane different therefrom, selected from the group consisting of (meth)acryl-, vinyl-, cyano-, hydroxyl-, epoxy-, isocyanate-, mercapto-functionalized silane, and a silane functionalized with a secondary amine,
2) a (meth)acryl-functionalized silane and an isocyanate- or epoxy-functionalized silane or
3) an azide-functionalized silane and a (meth)acryl-, vinyl-, cyano-, amine-, hydroxyl-, epoxy-, isocyanate- or mercapto-functionalized silane.

7. Process according to claim 6, wherein the metal oxide is selected from the group consisting of silicon dioxide, aluminium oxide, iron oxide, tin oxide, zinc oxide and mixtures thereof and is preferably silicon dioxide.

8. Process according to claim 6 or 7, wherein
the stirring of the suspension in step b) is effected while heating to a temperature in the range of from 25°C to 60°C, preferably at approximately 60°C.

9. Process according to one of claims 6 to 8, wherein
in step d) a pH in the range of from 8 to 11, preferably 8.5 to 9.5, is set by adding aqueous basic solution.

10. Process according to claim 9, wherein
the aqueous basic solution is an aqueous solution of ammonia, triethylamine or ethylenediamine.

11. Process according to one of claims 6 to 10, wherein
the stirring of the mixture in step e) is effected over a period of from 30 minutes to 3 hours, preferably approximately 1 hour, at a temperature in the range of from 25°C to 60°C, preferably at approximately 60°C.

12. Use of a modified metal effect pigment according to one of claims 1 to 5 in a coating composition.

13. Use according to claim 12, **characterized in that** the coating composition is varnishes, paints, printing inks, nail varnish, inks, surface coatings or plastics.

## Revendications

1. Pigment à effet métallique modifié, où le pigment à effet métallique modifié est un pigment à effet métallique qui est couvert avec au moins une couche d'un oxyde métallique sélectionné dans le groupe consistant en le dioxyde de silicium, l'oxyde d'aluminium, le dioxyde de titane, l'oxyde de fer, l'oxyde d'étain, l'oxyde de zinc et des mélanges de ceux-ci, où une couche silanique, qui comprend au moins deux silanes bifonctionnels différents les uns des autres ou des unités dérivées de tels composés, est fixée sur cette couche, **caractérisé en ce que**
les au moins deux silanes bifonctionnels différents les uns des autres sont sélectionnés parmi une combinaison des suivants :
1) un silane fonctionnalisé par une amine primaire et un silane différent de celui-ci sélectionné dans le groupe consistant en un silane fonctionnalisé par un groupement (méth)acryle, vinyle, cyano, hydroxyle, époxy, isocyanate, mercapto, et un silane fonctionnalisé par une amine secondaire,
2) un silane fonctionnalisé par un groupement (méth)acryle et un silane fonctionnalisé par un groupement isocyanate ou époxy ou
3) un silane fonctionnalisé par un groupement azide et un silane fonctionnalisé par un groupement (méth)acryle, vinyle, cyano, amine, hydroxyle, époxy, isocyanate ou mercapto.

2. Pigment à effet métallique modifié selon la revendication 1, où l'oxyde métallique est sélectionné dans le groupe consistant en le dioxyde de silicium, l'oxyde d'aluminium, l'oxyde de fer, l'oxyde d'étain, l'oxyde de zinc et des mélanges de ceux-ci, et est de préférence le dioxyde de silicium.

3. Pigment à effet métallique modifié selon la revendication 1 ou 2 où, en dehors des au moins deux silanes bifonctionnels différents les uns des autres dans la couche silanique, aucun alkylsilane n'est présent dans la même couche et/ou où le pigment à effet métallique modifié n'a aucune autre couche de un ou plusieurs polymères organiques.

4. Pigment à effet métallique modifié selon l'une quelconque des revendications 1 à 3, où le pigment à effet métallique est sélectionné dans le groupe consistant en des pigments à base d'aluminium, des pigments à base de titane, des pigments à base de zirconium, des pigments à base de cuivre, des pigments à base de zinc, des pigments à base d'or, des pigments à base d'argent, des pigments à base de silicium, des pigments à base d'étain, des pigments à base d'acier, des pigments à base de fer ainsi que des pigments à base d'alliages de ceux-ci, et des mélanges de ceux-ci.

5. Pigment à effet métallique modifié selon l'une quelconque des revendications 1 à 4, où le silane fonctionnalisé par une amine est un silane fonctionnalisé par au moins un groupement amine primaire ou secondaire et est de préférence sélectionné dans le groupe consistant en les suivants :
3-aminopropyltriéthoxysilane, 3-aminopropyltriméthoxysilane, 4-aminobutyltriéthoxysilane, 3-aminopropyl-tris(méthoxyéthoxyéthoxy)silane, 11-amino-undécyltriéthoxysilane, 3-aminopropylsilane-triol, 3-aminopropylméthyldiéthoxysilane, 3-aminopropyl-diisopropyléthoxysilane, 3-aminopropyl-diméthyléthoxysilane, N-aminoéthylaminopropyltriméthoxysilane, N-aminoéthyl-3-aminopropyltriéthoxysilane, N-aminohexyl-2-aminométhyltriéthoxysilane, N-aminohexyl-aminométhyltriméthoxysilane, N-aminoéthyl-11-amino-undécyltriméthoxysilane, (aminométhylaminométhyl)phénéthyltriméthoxysilane, N-aminoéthyl-3-aminopropylsilane-triol, N-aminoéthyl-3-aminopropylméthyldiméthoxysilane, N-aminoéthylamino-isobutylméthyldiméthoxysilane, (aminoéthylamino)isobutyldiméthylméthoxysilane, (triméthoxysilylpropyl)diéthylènetriamine, N-méthyl-3-aminopropyltriméthoxysilane, N-éthylamino-isobutyltriméthoxysilane, N-(n-butyl)-3-aminopropyltriméthoxysilane, N-(n-butyl)-3-aminopropyltriéthoxysilane, N-(n-propyl)-3-aminopropyltriéthoxysilane, N-(n-propyl)-3-aminopropyltriméthoxysilane, N-phényl-3-aminopropyltriméthoxysilane, N-allyl-3-aminopropyltriméthoxysilane, N-éthylamino-isobutylméthyldiéthoxysilane et N-méthyl-3-amino-propylméthyldiméthoxysilane,
le silane fonctionnalisé par un groupement (méth)acryle est sélectionné dans le groupe consistant en les suivants : 3-méthacryloxypropyltriméthoxysilane, 3-méthacryloxypropyltriéthoxysilane, 2-méthacryloxyéthyltriméthoxysilane, 2-méthacryloxyéthyltriéthoxysilane, 3-méthacryloxypropyl-tris(méthoxyéthoxy)silane, 3-méthacryloxypropyl-tris(butoxyéthoxy)silane, 3-méthacryloxypropyl-tris(propoxy)silane, 3-méthacryloxypropyl-tris(butoxy)silane, 3-acryloxypropyl-triméthoxysilane, 2-acryloxyéthyl-triméthoxysilane, 3-acryloxypropyl-triméthoxysilane, 2-acryloxyéthyl-triéthoxysilane, 3-acryloxypropyl-tris(méthoxyéthoxy)silane, 3-acryloxypropyl-tris(butoxyéthoxy)silane, 3-acryloxypropyl-tris(propoxy)silane et 3-acryloxypropyl-tris(butoxy)silane,
le silane fonctionnalisé par un groupement vinyle est sélectionné dans le groupe consistant en les suivants :
vinyl-triméthoxysilane, vinyl-triéthoxysilane, vinyléthyl-dichlorosilane, vinylméthyl-diacétoxysilane, vinylméthyl-dichlorosilane, vinylméthyl-diéthoxysilane, vinyl-triacétoxysilane et vinyl-trichlorosilane,
le silane fonctionnalisé par un groupement cyano est sélectionné dans le groupe consistant en les suivants : 3-cyanopropyl-triéthoxysilane, 3-cyanopropyl-triméthoxysilane et 2-cyanoéthyl-triméthoxysilane,
le silane fonctionnalisé par un groupement isocyanate est sélectionné dans le groupe consistant en les suivants : 3-isocyanatopropyl-triéthoxysilane et 3-isocyanatopropyl-triméthoxysilane,
le silane fonctionnalisé par un groupement mercapto est sélectionné dans le groupe consistant en les suivants : 3-mercaptopropyl-triéthoxysilane, 3-octanoylthio-1-propyl-triéthoxysilane et 3-mercaptopropyl-triméthoxysilane,
le silane fonctionnalisé par un groupement époxy est sélectionné dans le groupe consistant en les suivants : 3-glycidyloxypropyl-triméthoxysilane, bêta-(3,4-époxycyclohexyl)éthyl-triméthoxysilane et 1,2-époxy-4(éthyltriéthoxysilyl)cyclohexane, et/ou
le silane fonctionnalisé par un groupement azide est sélectionné dans le groupe consistant en les suivants : 6-azidosulfonylhexyl-triéthoxysilane et (azidométhyl)phénéthyl-triméthoxysilane.

6. Procédé de production d'une pâte d'un pigment à effet métallique qui contient le pigment à effet métallique modifié selon l'une des revendications 1 à 5, comprenant les étapes suivantes :
a) mise en suspension d'un pigment à effet métallique qui est couvert avec au moins une couche d'un oxyde métallique sélectionné dans le groupe consistant en le dioxyde de silicium, l'oxyde d'aluminium, le dioxyde de titane, l'oxyde de fer, l'oxyde d'étain, l'oxyde de zinc et des mélanges de ceux-ci, dans un solvant organique ou un mélange d'un solvant organique et d'eau,
b) agitation de la suspension sous chauffage à une température dans une plage de 20 °C à 80 °C,
c) addition d'au moins deux silanes bifonctionnels différents les uns des autres, simultanément ou en succession, pour préparer un mélange,
d) éventuellement ajustement à un pH basique ou acide par addition d'un acide ou d'une base,
e) agitation du mélange pendant une période de 10 minutes à 20 heures à une température dans une plage de 20 °C à 80 °C,
f) éventuellement séparation du mélange par filtration pour obtenir une pâte d'un pigment à effet métallique et
g) éventuellement ajustement d'une teneur en solides de la pâte du pigment à effet métallique dans la plage de 50 à 70 % en poids par addition d'un solvant organique ou d'eau,
où le pigment à effet métallique est sélectionné dans le groupe consistant en des pigments à base d'aluminium, des pigments à base de titane, des pigments à base de zirconium, des pigments à base de cuivre, des pigments à base de zinc, des pigments à base d'or, des pigments à base d'argent, des pigments à base de silicium, des pigments à base d'étain, des pigments à base d'acier, des pigments à base de fer, ainsi que des pigments à base d'alliages de ceux-ci, et où le pigment à effet métallique est couvert avec au moins une couche d'un oxyde métallique sélectionné dans le groupe consistant en le dioxyde de silicium, l'oxyde d'aluminium, le dioxyde de titane, l'oxyde de fer, l'oxyde d'étain, l'oxyde de zinc et des mélanges de ceux-ci et
où les au moins deux silanes bifonctionnels différents les uns des autres sont sélectionnés parmi une combinaison des suivants
1) un silane fonctionnalisé par une amine primaire et un silane différent de celui-ci sélectionné dans le groupe consistant en un silane fonctionnalisé par un groupement (méth)acryle, vinyle, cyano, hydroxyle, époxy, isocyanate, mercapto, et un silane fonctionnalisé par une amine secondaire,
2) un silane fonctionnalisé par un groupement (méth)acryle et un silane fonctionnalisé par un groupement isocyanate ou époxy ou
3) un silane fonctionnalisé par un groupement azide et un silane fonctionnalisé par un groupement (méth)acryle, vinyle, cyano, amine, hydroxyle, époxy, isocyanate ou mercapto.

7. Procédé selon la revendication 6, où l'oxyde métallique est sélectionné dans le groupe consistant en le dioxyde de silicium, l'oxyde d'aluminium, l'oxyde de fer, l'oxyde d'étain, l'oxyde de zinc et des mélanges de ceux-ci, et est de préférence le dioxyde de silicium.

8. Procédé selon la revendication 6 ou 7, où
l'agitation de la suspension à l'étape b) est effectuée sous chauffage à une température dans la plage de 25 °C à 60 °C, de préférence à approximativement 60 °C.

9. Procédé selon l'une des revendications 6 à 8, où
à l'étape d), un pH est ajusté dans la plage de 8 à 11, de préférence de 8,5 à 9,5, par addition d'une solution aqueuse basique.

10. Procédé selon la revendication 9, où
la solution aqueuse basique est une solution aqueuse d'ammoniaque, de triéthylamine ou d'éthylènediamine.

11. Procédé selon l'une des revendications 6 à 10, où
l'agitation du mélange à l'étape e) est effectuée pendant une période de 30 minutes à 3 heures, de préférence pendant approximativement 1 heure, à une température dans la plage de 25 °C à 60 °C, de préférence à approximativement 60 °C.

12. Utilisation d'un pigment à effet métallique modifié selon l'une des revendications 1 à 5 dans une composition de revêtement.

13. Utilisation selon la revendication 12, **caractérisée en ce que** la composition de revêtement est un vernis, une peinture, une encre d'imprimerie, un vernis à ongles, une encre, un revêtement de surface ou un plastique.
